# EUROPÄISCHE PATENTANMELDUNG

(11) **EP 1 014 741 A1**
(43) Veröffentlichungstag der Anmeldung: **28.06.2000**
(21) Anmeldenummer: 98124179.7
(22) Anmeldetag: 21.12.1998
(51) Int. Cl.: H04Q 7/38

(54) **Verfahren zur Vermeidung von Unterbrechungen einer Sprachübertragung**

(71) Anmelder: TELEFONAKTIEBOLAGET LM ERICSSON, 126 25 Stockholm (SE)
(72) Erfinder: Bruhn, Stefan, 90491 Nürnberg (DE); Hellwig, Karl, 97539 Wonfurt (DE)
(74) Vertreter: Mohsler, Gabriele

(57) **Zusammenfassung**

Die Erfindung betrifft ein Verfahren und eine Vorrichtung zur Vermeidung von Unterbrechungen einer Sprachübertragung in einem zellularen Kommunikationssystem. Hierbei werden Sprachdaten in Segmente aufgeteilt und den Segmenten werden Übertragungsquanten, sogenannte Bursts, zugeordnet. Eine Anzahl an Segmenten wird in einem ersten Übertragungsmodus kodiert und zur Übertragung bereitgestellt. Dieser erste Übertragungsmodus ist beispielsweise für eine Übertragung in Full-rate. Weitere Segmente, die hierauf folgen werden danach in einem zweiten Übertragungsmodus kodiert und der Übertragung zur Verfügung gestellt. Der zweite Übertragungsmodus ist beispielsweise für eine Übertragung in Half-rate. Durch den Wechsel von einem ersten Übertragungsmodus in einen zweiten Übertragungsmodus bleiben unter Einsatz des sogenannten Interleavings Teile der zugeordneten Übertragungsquanten unbenutzt. Diese unbenutzten Übertragungsquanten werden zur Ausführung weiterer Funktionen, wie dem Initiieren eines Hand-overs oder der FACCH Signalisierung verwendet.

## Beschreibung

Die Erfindung betrifft ein Verfahren und eine Vorrichtung zur Vermeidung von Sprachunterbrechungen in einem zellularen Kommunikationssystem, beispielsweise in einem GSM System.

Bei einer Kommunikation über ein digitales zellulares Kommunikationssystem, wie beispielsweise dem GSM System oder aber dem UMTS (Universal Mobile Telecommunication System) System, treten Unterbrechungen einer Sprachübertragung in einigen Fällen auf. Eine Situation in der Unterbrechungen auftreten, ist die Änderung der Übertragungsmodus von der vollen Übertragungsrate, dem sogenannten Full-rate, auf die halbe Übertragungsrate, dem sogenannten Halfrate und zurück.

Eine weitere Situation in der Unterbrechungen der Sprachübertragung auftreten, ist bei dem sogenannten Hand-over, beispielsweise zwischen Zellen einer Basisstation. Unter Hand-over wird, wie allgemein bekannt, die automatische Übergabe einer aktuell bestehenden Sprachverbindung von einer Zelle zu einer anderen verstanden. Hierbei wird mit ersten Mitteln festgestellt, daß ein Hand-over vorgenommen werden muß, und mit zweiten Mitteln wird die Verbindung über einen Kanal in einer aktuellen Zelle zu einem anderen Kanal in einer anderen Zelle geschaltet. Idealerweise soll dies derart vorgenommen werden, daß für einen Nutzer nicht bemerkbar ist, oder zumindest die Störung des Nutzers auf ein Minimum reduziert ( 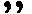 The GSM System for Mobile Communication"; von: M. Mouly et al; Cell & Sys, Paris).

Eine Methode zur Vermeidung eines vollständigen Abbruchs einer Sprachverbindung bei einem Hand-over ist aus GB 2281 177 bekannt. Das beschriebene Verfahren bezieht sich auf das Umschalten von Kanälen bei einem Übergang von einer Zelle in eine andere. Gemäß des Verfahrens wird vorgeschlagen, daß in jeder Zelle ein anderer Zeitschlitz für die Verbindung zur Verfügung steht. Bei der Bewegung von einer Zelle in eine andere, werden zuerst beide Zeitschlitze gleichzeitig verwendet. Hierbei steht ein erster Zeitschlitz der alten Verbindung zur Verfügung und dient dem Erhalt der Qualität der Verbindung und der zweite Zeitschlitz wird für die neue Verbindung bereitgestellt.

Hierdurch wird zwar vermieden, daß eine Verbindung augenblicklich und vollständig abbricht, aber es tritt ebenfalls eine hohe Belegung der Kanäle auf. Dies ist insbesondere bei heute vorliegenden geringen Ressourcen an Übertragungskapazität und hohem Verkehr in den einzelnen Zellen nachteilig, da die Kanäle zu stark belegt sind und somit auch zu schlechter Qualität bei der Sprachübertragung führen, ebenso wie zu kurzzeitigen Unterbrechungen in der Sprachübertragung durch Verlust einzelner, Sprachdaten enthaltender Segmente.

Eine weitere bekannte Methode ist dem Patent US 5,577,047 zu entnehmen. Hierin wird eine Methode für ein sogenanntes Hand-over in einem TDMA (Time Division Multiple Access) System beschrieben. Das System setzt sich aus einer sogenannten entfernten Station und mindestens zwei Basisstationen zusammen. Hierbei wird in der Station eine Zeitverzögerung zwischen, von den Basisstationen gesendeten, und von der Station empfangenen Signalen gemessen. Basierend auf der Zeitverzögerung wird ein möglicher Zeitschlitz für einen weiteren TDMA Kanal ermittelt. Über diesen Kanal wird ein weiteres Signal von der weiteren Basisstation zu der Station gesendet. Das weitere Signal beinhaltet die gleich Information wie das erste Signal. Beide von der Station empfangenen Signale werden kombiniert, um ein kombiniertes Signal für die weitere Verarbeitung zu schaffen. In dem beschriebenen Verfahren wird, zur Bereitstellung der notwendigen weiteren Kanäle, eine Übertragungsrate gewählt, die der halber Übertragungsrate der vorherigen Übertragung entspricht, um damit die doppelte Anzahl an Kanälen bereitzustellen. Dazu wird bei einer Übertragung bei der mit voller Übertragungsrate kodiert wird in eine weitere, die mit halber Übertragungsrate kodiert, umgeschaltet. Bei diesem beschriebenen Verfahren wird zwar ein Verlust oder der Abbruch einer Übertragung während des Hand-overs von einer Zelle zu einer anderen Zelle vermeiden, aber das Umschalten zwischen den Übertragungsraten beinhaltet ebenfalls eine Unterbrechung der Übertragung, die zu Einschränkungen in der Qualität der Sprachübertragung führt.

Demgemäß liegt der Erfindung die Aufgabe zugrunde ein Verfahren und eine Vorrichtung zu schaffen, bei der die Unterbrechung einer Sprachübertragung bei einem Hand-over vermieden wird.

Es ist weiter Aufgabe der Erfindung ein Verfahren und eine Vorrichtung vorzusehen, bei der ein Umschalten zwischen Kodierungen mit unterschiedlicher Übertragungsmodi während einer Sprachverbindung ohne Unterbrechung derselben erfolgt.

Dies wird erfindungsgemäß gelöst durch die Lehre des Anspruchs 1 und durch die Lehre des Anspruchs 8.

Vorteilhaft erweist sich hierbei, daß die Qualität der Sprachübertragung stets gut bleibt und keine solchen Unterbrechungen auftreten, die die Hörqualität während einer Verbindung einschränken.

Ebenfalls vorteilhaft ist, daß eine optimale Ausnutzung der zur Verfügung stehenden Kapazitäten erfolgt und somit eine Vielzahl an Sprachverbindungen bei gleichzeitig hoher Qualität bestehen oder aufgebaut werden können.

Weiter vorteilhaft ist, daß das Verfahren und die Vorrichtung ein flexibles Umschalten zwischen Übertragungsverfahren unterschiedlichen Übertragungsrate, also bei Verfahren und Vorrichtungen bei denen die Segmente mit unterschiedlichen Übertragungsmodi kodiert sind, erlaubt bei gleichzeitig hoher Qualität der Sprachübertragung.

Weitere vorteilhafte Ausgestaltungen sind den Ansprüchen 2 bis 7 und 9 bis 10 zu entnehmen. Weiter vorteilhafte Verwendungen sind den Ansprüchen 12 und 13 zu entnehmen.

Besonders vorteilhaft erweist sich gemäß Anspruch 4, daß bei der Anwendung einer Signalisierungsinformation gemäß FACCH (Fast Associated Control Channel), bei der Sprachsegmente zweckentfremdet verwendet werden, keine Sprachsegmente durch FACCH Segmente ersetzt werden, die einen Verlust der Sprachsegmenten zur Folge haben, sondern die FACCH zu den Sprachsegmenten hinzugefügt werden, wodurch kein Verlust und keine Beeinträchtigung der Sprachqualität auftritt.

Ebenfalls vorteilhaft erweist sich, daß ein Anwendung der Erfindung sowohl bei einem Hand-over innerhalb einer Zelle als auch bei einem Hand-over zwischen verschiedenen Zellen anwendbar ist.

Im folgenden wird die Erfindung anhand der Figuren und anhand von Ausführungsbeispielen näher erläutert. Folgende Figuren zeigen:
Fig. 1: Ablaufdiagramm des erfindungsgemäßen Verfahrens nach Anspruch 1,
Fig. 2: schematische Darstellung des Umschaltens von Full-rate nach Half-rate,
Fig. 3: schematische Darstellung des Umschaltens von Half-rate nach Full-rate,
Fig. 4: schematische Darstellung einer FACCH Segmenteinfügung.

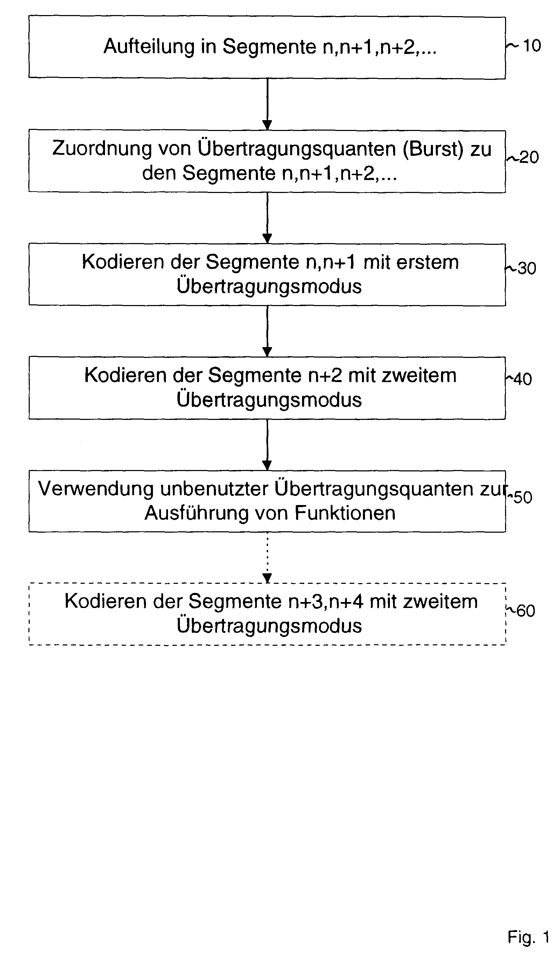

Im folgenden wird die Erfindung anhand von Figur 1 näher erläutert.

Bei einem Verfahren zur Vermeidung von Unterbrechungen einer Sprachübertragung in zellularen Kommunikationssystemen, werden in einem ersten Schritt 10 Sprachdaten in Segmente n,n+1,n+2,..., aufgeteilt. Die Aufteilung der Sprachdaten in Segmente ist eine für die Sprachübertragung übliche Vorgehensweise. Hierbei werden sie Sprachdaten beispielsweise in Segmente von 20ms Länge aufgeteilt.

In einem weiteren Schritt 20 werden den Segmenten n,n+1,n+2,..., Übertragungsquanten, sogenannte Bursts zugeordnet. Es existieren verschiedene Sorten von Übertragungsquanten, beispielsweise sogenannte Access Burst sowie auch normale Bursts. Eine Form von Übertragungsquantum setzt sich beispielsweise aus einer Anzahl von Bits zusammen. Eine Struktur ist beispielsweise eine Aufteilung in 3 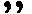 Tail" Bits am Anfang und am Ende des Übertragungsquantum, einer Trainingseinheit von 26 Bit in der Mitte und zwei Informationseinheiten mit 58 Bit die jeweils zwischen den Enden und der Trainingssequenz vorhanden sind. Demgemäß ist ein Übertragungsquantum aufteilbar in zwei Teile gleichen Aufbaus. Auf die Gründe für eine Wahl einer solchen Aufteilung und Anordnung soll nicht näher eingegangen werden, vielmehr wird auf den Stand der Technik verwiesen.

In einem weiteren Schritt 30 wird eine erste Anzahl an Segmenten n,n+1 für die Übertragung mit einer ersten Übertragungsrate kodiert. In einem darauffolgenden Schritt 40 wird ein folgendes Segment n+2 für die weitere Übertragung mit einer zweiten Übertragungsrate kodiert. Das Ändern der Kodierung der Segmente von einem ersten Übertragungsmodus in einen zweiten Übertragungsmodus erfolgt aufgrund vordefinierter Ereignisse oder aufgrund des Eintretens bestimmter Zustände. Ein Beispiel dafür ist ein Hand-over. Bevor ein Hand-over eingeleitet wird, erfolgt beispielsweise eine Feldstärkemessung in einem Endgerät. Aufgrund der gemessenen Feldstärke, also einem bestimmten Zustand der Verbindung, wird ein Hand-over zu einer anderen Zelle notwendig. Hierauf wird im folgenden noch näher eingegangen. Ein weiteres Beispiel ist eine hohe Kanalbelegung innerhalb einer Zelle, die es notwendig macht auf ein Übertragungsverfahren mit einer niedrigeren Übertragungsrate umzuschalten. Hierbei wir ebenfalls das Verkehrsaufkommen innerhalb einer Zelle gemessen und leitet somit das Umschalten zwischen den Verfahren ein. Hierauf wird ebenfalls später näher eingegangen.

In einem weiteren Schritt 50 werden unbenutzte Teile der zugeordneten Übertragungsquanten zur Ausführung weiterer Funktionen verwendet werden. Die unbenutzten Übertragungsquanten oder Teile davon entstehen dadurch, daß das Segment für die Übertragung bereits mit einem zweiten Übertragungsmodus kodiert wird, während die Zuordnung des Kanals aber noch für die Übertragung entsprechend einem ersten Übertragungsmodus bereitsteht. Dies wird im folgenden anhand der weiteren Figuren und der Ausführungsbeispiele näher erläutert.

Darüber hinaus können die folgenden Segmente dann, wie in Schritt 60 gezeigt, weiter mit dem zweiten Ubertragungsmodus kodiert und übertragen werden. Dies ist durch die gepunktete Linie in Figur 1 angezeigt, da dies einem möglichen aber nicht notwendigen Anwendungsbeispiel entspricht.

Das Verfahren zur Vermeidung von Unterbrechungen in Sprachübertragungen in zellularen Kommunikationssystemen findet beispielsweise Anwendung in GSM Systemen oder aber in UMTS Systemen oder in einem amerikanischen D-AMPS System oder aber in anderen Systemen zellularer Kommunikation.

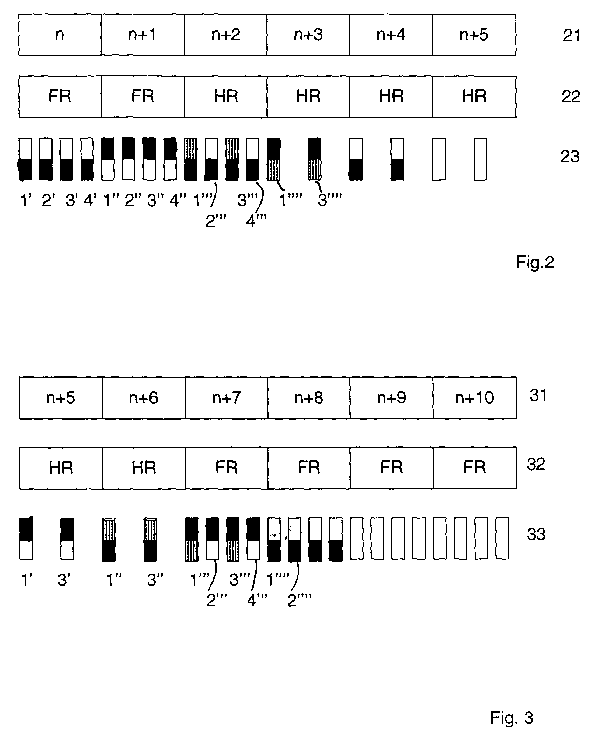

Im folgenden wird die Erfindung anhand von Figur 2 und einem Ausführungsbeispiel näher erläutert.

Gemäß Figur 2 wird die Anwendung der Erfindung bei einem Umschalten zwischen einer Kodierung mit einem ersten Übertragungsmodus und einer Kodierung mit einem zweiten Übertragungsmodus während einer Übertragung näher erläutert. Die Erfindung soll beispielsweise Anwendung finden in einem zellularen Kommunikationssystem bestehend aus Basisstationen und mobilen Stationen die gemäß bekannter Architekturen, beispielsweise aus GSM, ein Kommunikationssystem bilden.

Ein Umschalten zwischen einer Kodierung mit einem ersten Übertragungsmodus, beispielsweise bei einer vollen Übertragungsrate, im folgenden Full-rate genannt, und einer Kodierung mit einem zweiten Übertragungsmodus, beispielsweise einer halben Übertragungsrate, im folgenden Half-rate genannt, wird beispielsweise für den Fall vorgenommen, daß auf den Übertragungskanälen eine hohe Last oder Verkehrsaufkommen auftritt. Durch das Umschalten von Full-rate auf Half-rate stehen weitere Kanäle für eine Übertragung zur Verfügung, genauer gesagt die doppelte Anzahl.

Zwischen einer mobilen Station und einer Basisstation ist eine Verbindung zur Übertragung von Sprachdaten aufgebaut. Aufgrund der vorgenannten Gründe findet ein Umschalten zwischen einer Kodierung mit unterschiedlichen Übertragungsmodi und entsprechender Übertragung der Sprache mit unterschiedlichen Übertragungsraten statt. Hierzu einigen sich die Basisstation und die mobile Station über die Zeit zu der das Umschalten stattfindet.

Gemäß Figur 2 ist in einer ersten Zeile 21 eine Aufteilung in Segmente dargestellt. Die Segmente tragen die Kennzeichnung n,n+1,n+2,... . In einer zweiten Zeile 22 ist angegeben in welcher Übertragungsmodus das jeweilige Segment kodiert wird. Das erste Segment n ist hierbei in Full-rate FR kodiert, das zweite Segment n+1 ebenfalls in Full-rate FR. Gemäß des Ausführungsbeispiels wir davon ausgegangen, daß Gründe für ein Umschalten vorliegen. Die Basisstation und die mobile Station einigen sich darauf, daß ein Umschalten stattfindet. Das aktuelle Segment während der Einigung über das Umschalten wird in dem aktuellen Übertragungsmodus, hier also Full-rate FR kodiert. Dies ist gemäß des Ausführungsbeispiels das Segment n+1. Jedes weitere Segment wird, gemäß der Einigung über das Umschalten mit einem anderen Übertragungsmodus, also Half-rate HR, kodiert. Dies ist beispielsweise jedes Segment ab dem dritten Segment n+2. Alle weiteren Segmente n+3,... sind ebenfalls in Half-rate HR kodiert, wie sich dies aus der Figur 2 in Zeile 22 ergibt.

Den Segmenten n,n+1,n+2,... sind Übertragungsquanten, sogenannte Bursts zugeordnet. Jedem Segment sind vier Übertragungsquanten 1',2',3',4',1'',2'',3'',4'',1''',... zugeordnet, die derart gebildet sind, daß sie jeweils wiederum in zwei Teile aufgeteilt werden. Die Übertragungsquanten werden in gerade 2',4',2'',4''... und ungerade 1',3',1'',3'',... Positionen aufgeteilt. Bei einer Übertragung der eine Half-rate Kodierung zugrunde liegt, werden entweder die geraden Positionen oder die ungeraden Positionen der Übertragungsquanten zur Übertragung genutzt. Welche Position zur Übertragung genutzt wird ist abhängig von einer Vereinbarung. Die Übertragungsquanten sind in der Zeile 23 dargestellt. Die Aufteilung der Übertragungsquanten selbst wieder in zwei Teile führt beispielsweise zu einer Aufteilung in zwei Hälften, welche sich vorzugsweise dadurch ergibt, daß die zuvor bereits genannten Übertragungsquanten, die Bursts, symmetrisch aufgebaut sind und jede Hälfte Informationen sowie Endbits und Trainigsbits enthält.

Das dritte Segment n+2 ist das erste Segment das in Half-rate HR kodiert ist. Gemäß der Figur 2 werden die ungeraden Positionen 1' 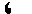 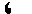 ,3' 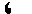 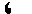 ,1 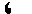 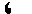 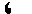 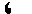 ,3 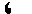 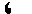 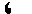 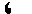 ,... zur Übertragung in Half-rate verwendet. Die anderen Positionen 2 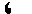 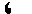 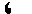 ,4 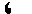 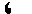 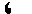 ,2 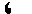 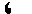 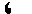 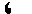 ,4 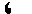 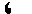 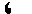 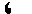 ,... bleiben für diese Verbindung unbenutzt und stehen einem weiteren Teilnehmer zur Verfügung.

Eine Übertragung in Full-rate wird in der Figur 2 in Zeile 23, also bei der Darstellung der Übertragungsquanten derart dargestellt, daß die Übertragungsquanten eines aktuellen ersten Segmentes n die erste Hälfte der Information des aktuellen Segmentes übertragen und die Übertragungsquanten des zweiten Segmentes n+1 die zweite Hälfte der Information des vorangegangenen Segmentes übertragen. Diese Verschachtelung für die Übertragung ist unter dem Fachbegriff 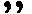 Interleaving" bekannt und stellt eine übliche Vorgehensweise bei der Übertragung dar. Dies ist in der Figur 2, Zeile 23 dadurch dargestellt, daß die untere Hälfte der Übertragungsquanten des ersten Segmentes n voll ausgefüllt dargestellt sind und die obere Hälfte der Übertragungsquanten des zweiten Segmentes n+1 ebenfalls. In dem dritten Segment n+2, dem ersten Half-rate Segment, wird die zweite Hälfte des vorherigen Segmentes n+1 übertragen. Dies ist ebenfalls dargestellt, indem die untere Hälfte der Übertragungsquanten ausgefüllt sind. Ebenfalls wird in diesem Segment die erste Hälfte des aktuellen Segmentes übertragen. Die zweite Hälfte des aktuellen Segmentes wird im folgenden Segment übertragen. Da dies das erste in Half-rate kodierte Segment ist, wird entweder die ungerade oder die gerade Position für die Übertragung verwendet. Gemäß des Ausführungsbeispiels und gemäß der Festlegung wird die ungerade Position 1 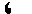 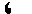 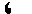 ,3 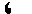 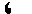 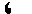 ,1 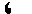 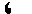 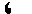 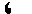 ,... verwendet. Dies ist durch die vertikal gestrichenen Hälften 1 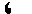 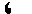 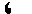 ,3 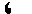 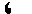 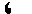 in Segment n+2 dargestellten. Demgemäß ist jede zweite Position 2 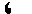 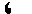 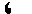 ,4 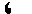 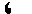 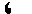 unbenutzt. Dies ist durch die weißen Hälften in Segment n+2 dargestellt. Da in Segment n+2 die erste Hälfte des aktuellen Segmentes übertragen wird und die zweite Hälfte des vorherigen Segmentes, ist dies ein sogenanntes Übergangssegment.

In dem Übergangssegment sind die Segmente bereits mit der neuen Übertragungsrate kodiert, die Zuordnung des Kanals für die Übertragung ist in diesem Segment aber noch in Full-rate. Dies ist deshalb notwendig, da die zweite Hälfte des vorherigen Segmentes, also des letzten Full-rate Segmentes noch zu übertragen ist. Daraus resultiert, bei Übertragung der ersten Hälfte in Half-rate, daß zwei Hälften der Übertragungsquanten, nämlich jeweils eine Hälfte des Übertragungsquantum 2 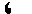 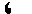 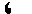 und 4 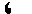 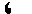 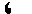 unbenutzt bleiben.

Die unbenutzten Hälften der Übertragungsquanten werden dazu benutzt Signalisierungsbits einzufügen Mittels dieser Signalisierungsbits wird beispielsweise signalisiert, daß von Full-rate auf Half-rate umgeschaltet wird. Die Signalisierungsbits bestehen beispielsweise aus einer Bitfolge mit Nullen, oder aber die Bitfolge wird aus eine Reihe von Zufallszahlen gebildet und in die Übertragungsquanten eingefügt. Hierbei ergibt sich, daß die genaue Zeit des Hand-overs, also der genaue Zeitpunkt zu der von der Kodierung mit dem ersten Übertragungsmodus in die Kodierung mit dem zweiten Übertragungsmodus umgeschaltet wird, nicht genau festgelegt werden muß.

Die weiteren Segmente n+3, n+4 sind in Half-rate HR kodiert und die Kanalkodierung ist ebenfalls in Half-rate. Die weiteren Übertragungsquanten stehen damit einer weiteren Verbindung zur Verfügung.

Im folgenden wird anhand von Figur 3 das Umschalten von Half-rate auf Full-rate erläutert.

In der Figur wird in der ersten Zeile 31 eine Aufteilung der Sprachdaten in Segmente angezeigt. Hierbei sind die Segmente als Segment n+5 ,n+6 ,n+7,... dargestellt. In der Zeile 32 sind die entsprechenden Übertragungsmodi gezeigt. Das Segment n+5 ist, ebenso wie das Segment n+6 in Half-rate HR kodiert. In Zeile 33 sind die Übertragungsquanten 1 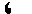 ,2 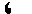 ,3 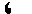 ,4 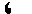 ,1 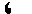 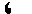 ,2 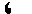 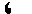 ,3 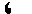 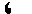 ,4 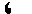 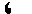 ,1 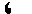 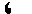 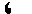 ,... gezeigt. Hierbei wird auf die Beschreibung zu Figur 2 verwiesen.

Das erste Segment n+5 ist mit einem ersten Übertragungsmodus, hier Half-rate HR kodiert, ebenso wie das zweite Segment n+6. Dies ist gemäß Zeile 32 zu ersehen. Die Basisstation und die mobile Station einigen sich während eines aktuellen Segmentes, also n+7 über ein Umschalten von Half-rate HR zu Full-rate FR. Dies tritt beispielsweise dann auf, wenn wieder genügend Kanalkapazität zur Verfügung steht, so daß einer Übertragung eine hohe Übertragungsrate zur Verfügung steht. Dies kann beispielsweise dann hilfreich und sinnvoll sein, wenn aufgrund zu geringer Kanalkapazität erst von Full-rate auf Half-rate umgeschaltet wurde, danach aber wieder ausreichend Kanalkapazität bereitsteht, so daß wieder auf Full-rate umgeschaltet werden kann. Daß ausreichend Kanalkapazität wird zuvor ermittelt.

Wenn sich in einem aktuellen Segment, beispielsweise Segment n+7 über das Umschalten geeinigt wird, wird die Kanalbelegung bereits auf Full-rate umgestellt. Der Kanal ist also bereits bereit eine Übertragung mit höherer Übertragungsrate zu erlauben. Demgemäß sind wieder alle 4 Übertragungsquanten pro Segment verfügbar, hier 1 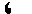 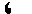 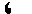 ,2 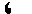 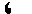 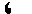 ,3 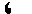 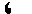 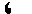 ,4 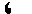 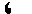 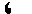 . Dies ist in Zeile 33 zugehörig zu Segment n+7 gezeigt. In dem aktuellen Segment wird in einer Hälfte der Übertragungsquanten auf der ungeraden Position 1 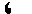 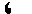 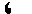 und 3 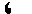 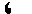 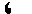 der zweite Teil des Information des vorherigen Segmentes n+6 übertragen, hier durch vertikal gestrichene Hälften angezeigt. Ebenfalls wird bereits die erste Hälfte des aktuellen in Full-rate kodierten Segmentes übertragen, hier durch die ausgefüllten Hälften dargestellt. Demgemäß bleibt jeweils eine Hälfte der Übertragungsquanten 2 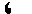 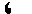 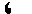 und 4 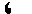 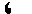 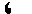 unbenutzt und steht für eine Ausführung weiterer Funktionen zur Verfügung. Hierbei wird beispielsweise wie bereits zuvor erläutert eine Bitfolge zur Signalisierung des Hand-overs von einem Übertragungsmodus in einen anderen signalisiert, ohne daß sich die Basisstation und der mobile Teilnehmer über den genauen Zeitpunkt einigen.

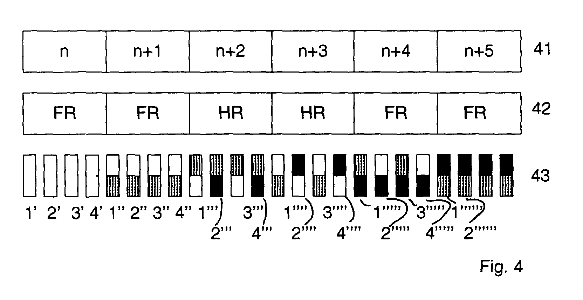

Im folgenden wird anhand von Figur 4 eine weitere Anwendung der Erfindung gemäß Anspruch 5 anhand eines Ausführungsbeispiels erläutert. Die Anordnung gemäß der Figur 4 ist gewählt wie in den Figuren 3 und 2. Hierbei ist in Zeile 41 eine Aufteilung der Sprachdaten in eine Anzahl an Segmente n, n+1, n+2, n+3,. . .gezeigt. Die Segmente n und n+1 sind hierbei in einem ersten Übertragungsmodus, hier Full-rate FR, kodiert. Die Segmente n+2 und n+3 sind in einem zweiten Übertragungsmodus, hier Half-rate HR, kodiert. Die Segmente n+4 und n+5 sind wieder in dem ersten Übertragungsmodus kodiert. Dies ist Zeile 42 zu entnehmen. Die zugeordneten Übertragungsquanten sind in Zeile 43 dargestellt. Die Übertragungsquanten sind hier ebenfalls in zwei Teile, vorzugsweise Hälften aufgeteilt.

Bei einer Sprachübertragung in einem zellularen Kommunikationssystem, beispielsweise einem GSM System, ist es während einer Sprachverbindung ebenfalls notwendig, neben den Sprachdaten auch Signalisierungsinformationen zu übertragen. Mittels dieser Signalisierungsinformationen wird es einem mobilen Teilnehmer und einer Basisstation ermöglicht weitere Funktionen zu vereinbaren oder zu überprüfen. Für eine Signalisierung während einer Verbindung, also einer Sprachübertragung, existieren in GSM zwei Möglichkeiten. Eine Möglichkeit ist bekannt unter FACCH (Fast Associated Control Channel) Signalisierung. Die FACCH Signalisierung dient beispielsweise dem Hand-over oder aber der Authentifizierung eines Teilnehmers. Diese FACCH Signalisierung wird durch Einfügen eines FACCH Segmentes vorgenommen.

Gemäß des Ausführungsbeispiels wird das Segment n+2 in einem zweiten Übertragungsmodus kodiert. Hierbei muß der zweite Übertragungsmodus geringer sein als der erste Übertragungsmodus. Demgemäß wird das Segment n+2 in Half-rate HR kodiert und übertragen. Hierbei wird dann in Segment n+2 die zweite Hälfte des vorangegangenen Segmentes übertragen. Dies entspricht der vertikal markierten oberen Hälfte der Übertragungsquanten in Zeile 43. Ebenfalls wird die erste Hälfte der Übertragungsquanten des aktuellen Segmentes n+2 übertragen. Dies ist durch die schwarz ausgefüllte untere Hälfte dargestellt. Da hier eine Half-rate Kodierung vorliegt, wird nur jede zweite Position zur Übertragung verwendet. Hier wurde beispielhaft die gerade Position 2 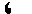 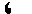 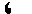 und 4 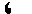 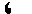 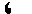 gewählt. Die Zuordnung des Kanals ist weiterhin Full-rate, weshalb alle Positionen zur Verfügung stehen. Demgemäß bleiben zwei halbe Übertragungsquanten unbenutzt. Dies entspricht der unteren Hälfte der Übertragungsquanten auf Position 1 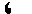 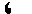 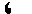 und 3 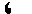 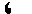 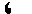 , also den ungeraden Positionen.

Im folgenden Segment n+3 liegt ebenfalls wieder eine Half-rate Kodierung vor. Hier wird die zweite Hälfte des vorangegangenen Segmentes übertragen, Positionen 2 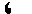 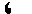 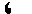 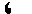 und 4 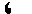 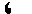 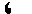 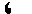 , und die erste Hälfte des aktuellen, angezeigt durch die ausgefüllten Übertragungsquanten der Position 1 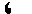 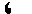 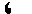 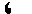 und 3 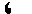 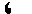 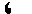 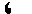 . Hierbei bleibt jeweils eine Hälfte der Übertragungsquanten unbenutzt. In dem darauffolgenden Segment n+4 setzt sich dies fort. Hier wird aber wieder in Full-rate kodiert, aber auf den Positionen 2 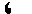 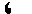 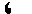 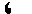 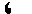 und 4 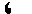 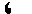 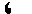 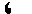 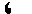 bleiben jeweils zwei Hälften unbenutzt, da noch die zweite Hälfte des vorangegangenen Segmentes zu übertragen ist.

Demgemäß ergibt sich, daß 8 halbe Übertragungsquanten durch Umschalten des Übertragungsmodus unbenutzt bleiben und zur Ausführung weiterer Funktionen zur Verfügung stehen. Gemäß des Beispieles werden in diese 8 halben Übertragungsquanten, die zusammen ein Segment bilden, FACCH Segmente zur Signalisierung eingefügt. Durch eine geeignete Umschaltung für eine bestimmte Anzahl an Segmenten wird demgemäß in vorteilhafter Weise die Ausführung einer weiteren Funktion ohne Beeinträchtigung der Sprachverbindung ermöglicht.

Ein solches Umschalten zu einem bestimmten Zeitpunkt, um weitere Segmente einzufügen, impliziert, daß die Bedingungen zu einem aktuellen Zeitpunkt gut sind, also eine Verbindung eine gute Qualität hat, oder aber, daß mit einer geringeren Fehlerkorrektur gearbeitet werden kann. Andererseits kann zum Erhalt der Fehlerkorrektur eine Nettobitrate der Sprachkodierung allgemein reduziert werden. Eine weitere Möglichkeit ist eine Erhöhung der Sendeleistung, damit eine Reduzierung der Qualität vermieden wird.

Im folgenden wird anhand eines Ausführungsbeispieles (ohne Figur) eine Anwendung der Erfindung für ein Hand-over eines mobilen Teilnehmers zwischen Zellen unterschiedlicher Basisstationen erläutert.

Ein Hand-over wird aufgrund bereits zuvor erläuterter Bedingungen notwendig. Hierbei wird beispielsweise ein Hand-over von einer ersten Basisstation zu einer zweiten Basisstation eingeleitet. Methoden der Detektion des notwendigen Zeitpunktes des Hand-over und dessen Ausführung sind nicht Gegenstand der Anmeldung. Hierbei wird vielmehr auf allgemein bekannte Methoden verwiesen.

Zur Vorbereitung des Hand-overs wird ein Kanal mit Full-rate Kanalkodierung zwischen dem mobilen Teilnehmer und der zweiten Basisstation reserviert. Nachdem ein Hand-over Befehl zu einem festgelegten Zeitpunkt zu dem mobiler Teilnehmer gesendet wurde, wird das folgende Segment mit einem zweiten Übertragungsmodus, hier Half-rate kodiert. Übertragen werden dabei die zweite Hälfte des vorangegangenen Segmentes und die erste Hälfte des aktuellen Segmentes. Hierbei muß festgelegt werden welche der Positionen der Übertragungsquanten in Half-rate übertragen. Gründe werden im folgenden erläutert.

Da hierbei zwei Hälften der Übertragungsquanten unbenutzt bleiben, können diese zur Ausführung weiterer Funktionen verwendet werden. Dies kann beispielsweise zur Signalisierung sein oder aber die erste Hälfte des Half-rate kodierten Segmentes kann wiederholt gesendet werden.

Da bisher lediglich eine Übertragung zwischen der ersten Basisstation und dem mobiler Teilnehmer stattgefunden hat, wird eine weitere Verbindung zu der zweiten Basisstation aufgebaut. Sowohl die erste Basisstation als auch die zweite Basisstation übertragen in Half-rate kodierten Segmente. In der Verbindung zu der zweiten Basisstation wird in einer aktuellen Übertragung die erste Hälfte des aktuellen Segmentes übertragen.

Aufgrund der gleichzeitigen Verbindung des mobiler Teilnehmers mit zwei Basisstation ist es notwendig, daß eine eindeutige Einigung über die Position der Übertragungsquanten besteht. Dazu ist es notwendig eine zeitliche Überlappung von gesendeten und empfangenen Übertragungsquanten zu vermeiden Da gemäß Definition der zeitliche Abstand zwischen einem empfangenen und einem gesendeten Übertragungsquantum bei einem mobiler Teilnehmer weniger oder maximal 3 Übertragungsquanten ist, kann dies durch Auswahl und Festlegung einer Position der Übertragungsquanten erreicht werden.

Darauf wird die Verbindung zu der zweiten Basisstation etabliert während die Verbindung zu der ersten Basisstation beendet wird. Da dies bekannte Methoden in GSM und anderen zellularen Kommunikationssystemen sind, wird hier nicht näher darauf eingegangen.

Darauf wird wieder in Full-rate kodiert, weshalb bei der Übertragung die zweite Hälfte des vorhergehenden Half-rate kodierten Segmentes übertragen wird, sowie die erste Hälfte des aktuellen Full-rate kodierten Segmentes. Hier bleiben ebenfalls wieder zwei Hälften unbenutzt und stehen einer weiteren Funktion zur Verfügung. Dies kann beispielsweise ebenfalls zur Signalisierung verwendet werden wie aber auch zur wiederholten Übertragung der Half-rate kodierten Segmente.

Ein solches Verfahren impliziert wie bereits im vorangegangenen Beispiel erläutert, daß die Qualität der Verbindung gut ist und daß während einer laufenden Verbindung zwischen den verschiedenen Übertragungmodi umgeschaltet werden kann. Ebenfalls sind die im vorangegangenen Methoden zur Ermöglichung der guten Qualität anwendbar.

Im folgenden wir eine erfindungsgemäße Vorrichtung näher erläutert (ohne Figur).

Eine Vorrichtung zur Vermeidung von Unterbrechungen einer Sprachübertragung in einem zellularen Kommunikationssystem weist ersten Mittel zum Aufteilen der Sprachdaten in Segmente n,n+1,n+2,..., auf. Weiter wird mittels diesen Mittels eine Zuordnen von Übertragungsquanten, den sogenannten Bursts zu den Segmenten n,n+1,n+2,... vorgenommen.

Die Vorrichtung weist weiter ersten Kodierungsmittel zum Kodieren einer ersten Anzahl an Segmenten n,n+1 für die Übertragung in einem ersten Übertragungsmodus auf. Ebenfalls weist die Vorrichtung zweite Kodierungsmittel zum Kodieren eines folgenden Segmentes n+2 für die Übertragung in einem zweiten Übertragungsmodus auf. Der erste und der zweite Übertragungsmodus sind hierbei immer unterschiedlich und es bleiben unbenutzte Teile, vorteilhafterweise Hälften, der Übertragungsquanten.

Weiter weist die Vorrichtung Mittel zum Einfügen von Informationen in die unbenutzten Teile der zugeordneten Übertragungsquanten auf, wobei die unbenutzten Teile zur Ausführung weiterer Funktionen verwendet werden.

Diese Informationen können sich beispielsweise aus einer Zufallszahlenbitfolge oder aber aus einer Bitfolge bestehend aus Nullen zusammensetzen. Hierzu sind weitere Mittel zum Erstellen einer Zufallszahlenbitfolge oder Mitteln zum Erstellen einer Bitfolge bestehend aus Nullen vorgesehen. Ebenfalls sind Mitteln zum Einfügen der Bitfolgen in die unbenutzten Teile der Übertragungsquanten vorgesehen.

Gemäß einer vorteilhaften Ausführung der Erfindung sind Mitteln zum Einfügen von FACCH Segmenten zur Signalisierung vorgesehen. Da ein vollständiges Segment bestehend aus 4 Übertragungsquanten eingefügt wird, unbenutzte Ubertragungsquanten aber nur verteilt auftreten, muß gewährleistet sein, daß das FACCH Segment verteilt eingefügt werden kann.

## Patentansprüche

1. Verfahren zur Vermeidung von Unterbrechungen einer Sprachübertragung in einem zellularen Kommunikationssystem, bei dem
- Sprachdaten in Segmente (n,n+1,n+2,...,) aufgeteilt werden,
- den Segmenten Übertragungsquanten (Burst) zugeordnet werden,
- eine erste Anzahl an Segmenten (n,n+1) für die Übertragung mit einem ersten Übertragungsmodus kodiert werden,
- ein folgendes Segment (n+2) für die Übertragung mit einem zweiten Übertragungsmodus kodiert wird,
- unbenutzte Teile der zugeordneten Übertragungsquanten zur Ausführung weiterer Funktionen verwendet werden.

2. Verfahren nach Anspruch 1,
- bei dem die unbenutzten Teile der zugeordneten Übertragungsquanten Hälften sind.

3. Verfahren nach Anspruch 1 oder 2, bei dem
- jedes weitere Segment (n+3,n+4,..) für die Übertragung mit dem zweiten Übertragungsmodus kodiert wird.

4. Verfahren nach Anspruch, bei dem
- in die unbenutzten Teile der zugeordneten Übertragungsquanten eine Bitfolge zur Signalisierung eines Umschaltens der Kodierung mit unterschiedlichen Übertragungsmodus eingefügt wird.

5. Verfahren nach Anspruch 1, bei dem
- in die unbenutzten Teile der zugeordneten Übertragungsquanten FACCH (Fast Associated Control Channel) Segmente zur Signalisierung eingefügt werden.

6. Verfahren nach Anspruch 1, bei dem
- mittels der unbenutzten Teile der zugeordneten Übertragungsquanten eine Signalisierung eines Handovers zwischen Zellen einer Basisstation des zellularen Kommunikationssystems vorgenommen wird.

7. Verfahren nach Anspruch 1, bei dem
- mittels der unbenutzten Teile der zugeordneten Übertragungsquanten eine Signalisierung eines Hand-overs zwischen Zellen unterschiedlicher Basisstationen des zellularen Kommunikationssystems vorgenommen wird.

8. Vorrichtung zur Vermeidung von Unterbrechungen einer Sprachübertragung in einem zellularen Kommunikationssystem, mit
- ersten Mitteln zum Aufteilen der Sprachdaten in Segmente (n,n+1,n+2,...,) und zum Zuordnen von Übertragungsquanten (Burst) zu den Segmenten,
- ersten Kodierungsmitteln zum Kodieren einer ersten Anzahl an Segmenten (n,n+1) für die Übertragung in einem ersten Übertragungsmodus,
- zweiten Kodierungsmitteln zum Kodieren eines folgenden Segmentes (n+2) für die Übertragung in einem zweiten Übertragungsmodus,
- Mitteln zum Einfügen von Informationen in unbenutzte Teile der zugeordneten Übertragungsquanten zur Ausführung weiterer Funktionen verwendet werden.

9. Vorrichtung nach Anspruch 8, mit
- Mitteln zum Erstellen einer Zufallszahlenbitfolge, und
- Mitteln zum Einfügen derselben in die unbenutzten Teile der Übertragungsquanten.

10. Vorrichtung nach Anspruch 8, mit
- Mitteln zum Erstellen einer Bitfolge bestehend aus Nullen, und
- Mitteln zum Einfügen derselben in die unbenutzten Teile der Übertragungsquanten.

11. Vorrichtung nach Anspruch 8, mit
- Mitteln zum Einfügen von FACCH (Fast Associated Control Channel) Segmenten in die unbenutzten Teile der Übertragungsquanten.

12. Verwendung des Verfahrens und der Vorrichtung zur Vermeidung von Unterbrechungen einer Sprachübertragung in einem nach dem GSM Standard arbeitenden Kommunikationssystem.

13. Verwendung des Verfahrens und der Vorrichtung zur Vermeidung von Unterbrechungen einer Sprachübertragung in einem nach dem D-AMPS Standard arbeitenden Kommunikationssystem.
